# FASCICULE DE BREVET EUROPEEN

(11) **EP 4 381 174 B1**
(45) Date de publication et mention de la délivrance du brevet: **07.05.2025**
(21) Numéro de dépôt: 22764439.0
(22) Date de dépôt: 27.07.2022
(51) Int. Cl.: F01D 9/04, F01D 5/18

(54) **CHEMISE DE REFROIDISSEMENT DE PALE CREUSE DE DISTRIBUTEUR**
KÜHLMANTEL EINER HOHLEN VERTEILERSCHAUFEL
COOLING JACKET OF A HOLLOW BLADE OF A DISTRIBUTOR

(30) Priorité: 05.08.2021 FR 2108515
(43) Date de publication de la demande: 12.06.2024
(73) Titulaire: SAFRAN AIRCRAFT ENGINES, 75015 Paris (FR)
(72) Inventeur: LEMONNIER, Jérôme Claude George, 77550 MOISSY-CRAMAYEL (FR); BOISNAULT, Franck Davy, 77550 MOISSY-CRAMAYEL (FR); VAN NOORT, Antoine Bruno, 77550 MOISSY-CRAMAYEL (FR); BAUDY, Kévin Claude Luc, 77550 MOISSY-CRAMAYEL (FR)
(74) Mandataire: Cabinet Beau de Loménie
(86) Numéro de dépôt international: PCT/FR2022/051510
(87) Numéro de publication internationale: WO 2023/012421

(56) Documents cités:
- EP-A1- 1 840 331
- WO-A1-2020/188212
- FR-A1- 2 976 616
- FR-A1- 3 066 783
- US-A- 5 145 315

## Description

### Domaine Technique

La présente invention se rapporte au domaine général des turbomachines aéronautiques et notamment aux turbomachines d'aéronef telles que les turboréacteurs et les turbopropulseurs, et elle concerne plus particulièrement les pales creuses de distributeur d'un moteur à turbine à gaz comportant une chemise de refroidissement.

### Technique antérieure

Une turbine d'un moteur à turbine à gaz comporte classiquement une ou plusieurs rangées d'aubes mobiles de turbine espacées de façon circonférentielle tout autour du rotor de la turbine. Elle comprend également un distributeur comportant généralement une pluralité d'aubes fixes ou directrices qui s'étendent sensiblement radialement entre des plateformes annulaires coaxiales radialement externe et radialement interne et qui sont espacées de façon circonférentielle les unes par rapport aux autres. Ces aubes fixes de distributeur, permettant de diriger le flux de gaz de veine vers les aubes mobiles de turbine situées en aval du distributeur à un angle et à une vitesse appropriée afin d'entraîner en rotation les aubes mobiles et le rotor de la turbine, sont donc directement en contact avec les gaz chauds issus de la chambre de combustion et sont soumises à de fortes températures. Elles nécessitent donc d'être refroidies et, pour pouvoir assurer un refroidissement efficace d'une aube fixe de distributeur, il est souhaitable d'avoir un dispositif de refroidissement qui soit thermiquement efficace pour permettre de dissiper une puissance thermique élevée par utilisation d'un débit d'air modéré.

De plus, il est souhaitable que ce dispositif de refroidissement soit étanche pour assurer que l'air mobilisé est uniquement dédié au refroidissement de l'aube. En effet, plus l'étanchéité du dispositif de refroidissement est élevée, plus son efficacité globale est grande, celle-ci étant une fonction croissante de l'étanchéité et de l'efficacité thermique du dispositif de refroidissement.

L'état de l'art comprend notamment les documents FR3066783A1 et US5145315A. Il est aussi connu par exemple avec la demande FR2976616 déposée au nom de la demanderesse de recourir à un système de ventilation comprenant une chemise tubulaire en tôle multi-perforée pour refroidir la pale creuse d'un distributeur par des impacts d'air de refroidissement traversant les orifices ménagés dans les parois de la chemise. Cet air prélevé en amont s'écoule ensuite vers l'aval où il est évacué dans la veine de gaz par des perforations prévues le long de la paroi du bord de fuite de la pale. Il est à noter que la face interne de la paroi de la pale peut éventuellement être pourvue d'éléments perturbateurs d'écoulement qui favorisent les échanges thermiques entre l'air circulant entre la chemise et la paroi de la pale.

Au montage, la chemise qui a été préalablement mise en forme et munie d'une douille d'entrée d'air et d'une plaquette de fermeture pour former un ensemble monobloc, est glissée dans la cavité interne de la pale creuse du distributeur à travers l'ouverture ménagée dans la plateforme annulaire radialement externe. La chemise est ensuite rendue solidaire de la pale par soudage ou brasage le long de son bord en contact avec la paroi de l'ouverture ménagée dans cette plateforme annulaire radialement externe. La partie opposée de la chemise est simplement guidée dans l'ouverture ménagée dans la plateforme annulaire radialement interne de la pale qui forme une glissière pour autoriser les déplacements relatifs entre la pale et la chemise. Ces déplacements longitudinaux sont dus aux variations de température pendant le fonctionnement de la turbomachine et au fait que les deux pièces sont différentes par la nature des matériaux qui les constituent et leur mode de fabrication.

Cette solution si elle donne globalement satisfaction accorde toutefois peu d'importance à la bonne alimentation en air des orifices de la chemise situés près du bord d'attaque des pales du distributeur et à la robustesse de l'alimentation en air des cavités inter-disques de la turbine. En effet, l'intérieur de la chemise n'est constitué que d'une unique cavité alimentant tous les orifices de la chemise. Dans un tel dispositif, l'air va préférentiellement vers les circuits et/ou orifices où la pression est la plus faible. Ainsi, dès que l'air va pénétrer dans la chemise par la douille d'entrée d'air, celui-ci va en priorité aller vers les orifices de la chemise situés le plus près des perforations prévues le long de la paroi du bord de fuite de la pale du distributeur, désalimentant de ce fait les perforations situées à proximité du bord d'attaque du distributeur et les cavités inter-disques, entrainant une perte de robustesse en étanchéité et refroidissement de ces mêmes cavités.

### Exposé de l'invention

La présente invention a donc pour but principal de pallier de tels inconvénients en proposant une chemise de refroidissement destinée à être montée dans une pale creuse de distributeur d'une turbomachine qui permette une meilleure répartition du débit d'air de ventilation admis dans la chemise. Un but est aussi de fournir une partie de ce débit d'air de ventilation vers d'autres organes de la turbomachine, notamment vers les cavités inter-disques d'une turbine, afin de les étancher et de refroidir les disques de turbine. Un autre but est encore de proposer un procédé d'assemblage d'un distributeur de turbine qui soit économiquement avantageux avec un coût de production le plus faible possible.

Ces buts sont atteints par une chemise de refroidissement pour une pale creuse de distributeur de turbine d'une turbomachine, comportant :
- un corps principal s'étendant selon une direction radiale entre une extrémité radialement interne et une extrémité radialement externe et comportant des faces extrados et intrados et un conduit d'admission central définissant une première zone de circulation d'air de ventilation et relié à ces deux faces par deux parois de séparation définissant des deuxième et troisième zones de circulation d'air de ventilation, chacune des faces extrados et intrados comportant au moins deux rangées de perçages pour évacuer l'air de ventilation des deuxième et troisième zones de circulation d'air de ventilation,
- une plaquette externe disposée à l'extrémité radialement externe du corps principal, la plaquette externe comportant des premier, deuxième et troisième orifices pour admettre l'air de ventilation respectivement dans les première, deuxième et troisième zones de circulation d'air de ventilation, et
- une plaquette interne disposée à l'extrémité radialement interne du corps principal, la plaquette interne comportant une ouverture centrale pour évacuer l'air de la première zone de circulation d'air de ventilation,
les plaquettes externe et interne étant solidarisées par brasage au corps principal pour former un ensemble monobloc à trois zones de circulation d'air de ventilation indépendantes et étanches les unes des autres, avant son montage dans la pale creuse du distributeur de turbine.

De préférence, le corps principal et les plaquettes externe et interne sont réalisées en fabrication additive et les perçages sont réalisés en électroérosion par enfonçage ou au laser.

Avantageusement, le premier orifice comporte une section qui, rapportée au nombre de pales, est plus grande que la somme des sections des injecteurs assurant les débits d'air de ventilation en aval, et les deuxième et troisième orifices d'admission d'air de ventilation comportent chacun une section qui est inférieure à la somme des sections des perçages assurant respectivement l'évacuation de l'air de ventilation des deuxième et troisième zones de circulation d'air de ventilation.

La présente invention concerne également un distributeur de turbine de turbomachine comportant deux plateformes annulaires coaxiales entre lesquelles s'étendent des pales creuses sensiblement radiales comportant chacune une chemise de refroidissement telle que précitée.

La présente invention concerne encore une turbomachine aéronautique, telle qu'un turboréacteur ou un turbopropulseur d'avion, comportant un distributeur de turbine tel que précité.

Enfin, la présente invention concerne un procédé d'assemblage d'une chemise de refroidissement de pale creuse de distributeur de turbine d'une turbomachine, caractérisé en ce qu'il consiste à : réaliser un corps principal s'étendant selon un axe radial entre une extrémité radialement externe et une extrémité radialement interne et comportant des faces extrados et intrados et un conduit d'admission central définissant une première zone de circulation d'air de ventilation et relié à ces deux faces par deux parois de séparation définissant des deuxième et troisième zones de circulation d'air de ventilation ; réaliser une plaquette externe comportant des premier, deuxième et troisième orifices pour admettre l'air de ventilation respectivement dans les première, deuxième et troisième zones de circulation d'air de ventilation ; réaliser une plaquette interne comportant une ouverture centrale pour évacuer l'air de ventilation de la première zone de circulation d'air de ventilation ; usiner au moins deux rangées de perçages sur chacune des faces extrados et intrados du corps principal pour évacuer l'air de ventilation des deuxième et troisième zones de circulation d'air de ventilation ; et solidariser par brasage les plaquettes externe et interne au corps principal pour former un ensemble monobloc à trois zones de circulation d'air de ventilation indépendantes et étanches les unes des autres, avant son montage dans la pale creuse du distributeur de turbine.

De préférence, les faces extrados et intrados constituant la forme externe du corps principal sont configurées pour épouser une cavité interne de la pale creuse du distributeur.

Avantageusement, les surfaces de contact entre le corps principal et chacune des plaquettes externe et interne et les surfaces externes et internes du corps principal sont en outre polies avant leur solidarisation en ledit ensemble monobloc.

De préférence, le matériau métallique présente une épaisseur d'au moins 0.5 mm.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 est une vue schématique en perspective d'un secteur de distributeur de turbine destiné à recevoir dans chacune de ses pales creuses une chemise de refroidissement selon l'invention,
[Fig. 2] la figure 2 est une vue externe en perspective d'une chemise de refroidissement selon l'invention destinée à être montée dans chacune des pales creuses du distributeur de turbine de la figure 1,
[Fig. 3] la figure 3 détaille les parties supérieure et intérieure de la chemise de la figure 1,
[Fig. 4] la figure 4 détaille les parties inférieure et intérieure de la chemise de la figure 1, et
[Fig. 5] la figure 5 est une vue en coupe de la chemise de refroidissement montée dans la cavité interne de la pale creuse du distributeur de turbine de la figure 1.

### Description des modes de réalisation

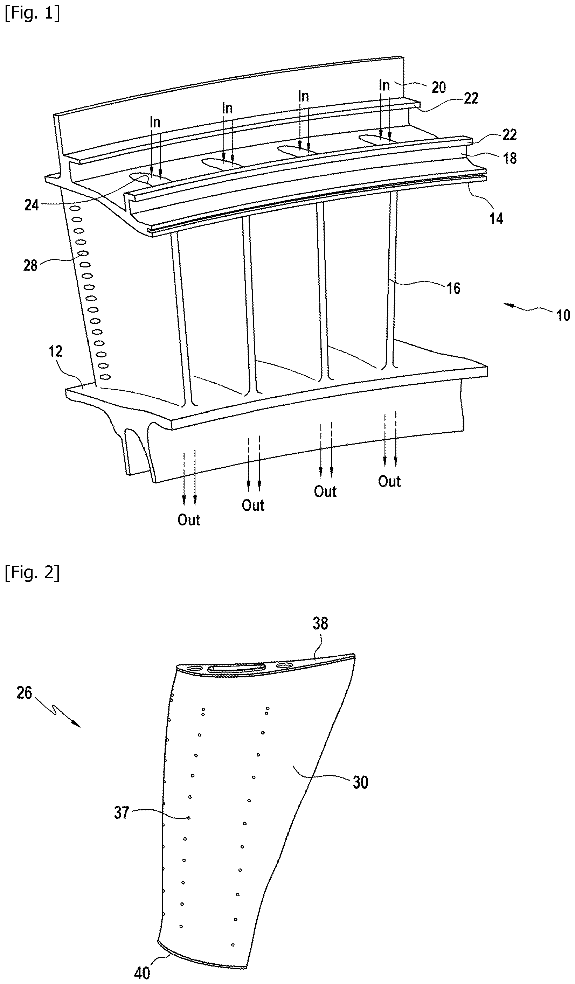

La figure 1 montre un secteur de distributeur de turbine 10 de turbomachine, telle qu'un turboréacteur ou turbopropulseur d'avion, comprenant deux plateformes annulaires coaxiales, respectivement interne 12 et externe 14, qui délimitent entre elles une veine annulaire d'écoulement des gaz et entre lesquelles s'étendent des pales creuses 16 sensiblement radiales (le nombre de pales pouvant être de l'ordre de plusieurs dizaines). La plateforme externe 14 comprend des rebords annulaires radialement externes amont 18 et aval 20 comportant des pattes annulaires axiales 22 orientées vers l'amont et destinées à être engagées dans des gorges annulaires axiales (non représentées) correspondantes d'un carter de turbine. Les termes externe et interne s'entendent par rapport à l'éloignement en direction radiale des éléments concernés de l'axe longitudinal de la turbomachine autour duquel s'étend le distributeur de turbine.

Les pales creuses du distributeur de turbine comprennent des cavités internes 24 dans chacune desquelles est montée une chemise de refroidissement 26 (visible sur la figure 2) destinée à assurer une circulation d'air de ventilation (voir les flèches In et Out, respectivement d'entrée et de sortie d'air) provenant d'une enceinte d'alimentation (non représentée) radialement externe à la plateforme externe 14, à la fois dans la pale creuse 16 (l'air ressortant par les fentes 28 du bord de fuite) et vers une enceinte de distribution (non représentée) radialement interne à la plateforme interne 12 et destinée à alimenter en air les cavités inter-disques de la turbine.

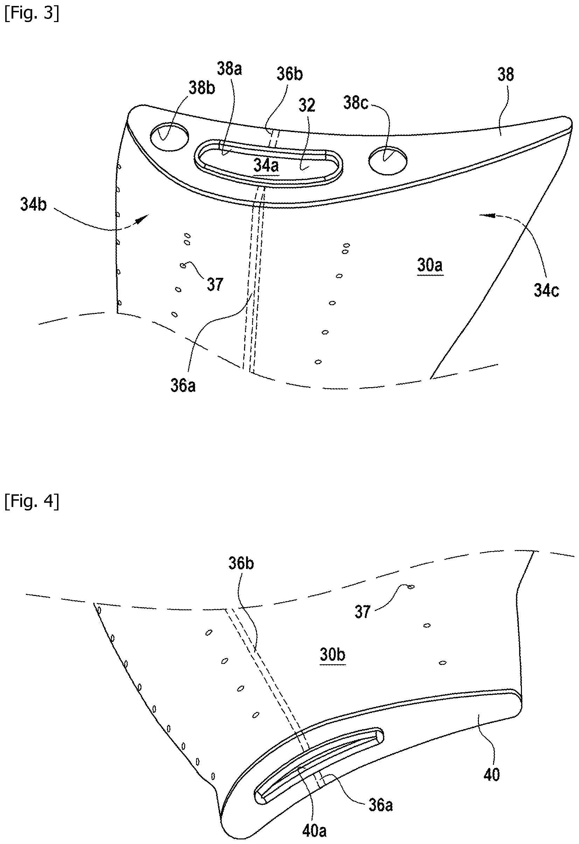

Conformément à l'invention et comme illustré en perspective externe aux figures 2 à 4, la chemise de refroidissement 26 comprend les éléments suivants:
- un corps principal 30 creux s'étendant selon la direction radiale entre une extrémité radialement externe et une extrémité radialement interne et comportant une face extrados 30a et une face intrados 30b, dont la forme externe constituée par ces deux faces épouse sensiblement la cavité interne 24 de la pale 16 du distributeur et qui est rendu solidaire d'un conduit d'admission central 32 définissant une première zone de circulation d'air de ventilation 34a, par l'intermédiaire de deux parois de séparation épaisses 36a, 36b disposées de part et d'autre de ce conduit d'admission central, entre le conduit d'admission central et chacune des deux faces 30a, 30b du corps principal, de façon à définir de part et d'autre de ces parois, avantageusement alignées, deux cavités amont et aval séparées, définissant respectivement des deuxième et troisième zones de circulation d'air de ventilation 34b, 34c, étanches l'une de l'autre et de la première zone de circulation d'air de ventilation 34a et pouvant être alimentées en air de ventilation indépendamment les unes des autres, les faces extrados et intrados du corps principal comportant chacune plusieurs rangées de perçages 37 (typiquement au moins deux, une par cavité) afin de permettre un refroidissement par impact de la paroi interne de la pale 16 du distributeur,
- une plaquette externe (première plaquette 38) destinée à être solidarisée à l'extrémité radialement externe du corps principal et sur laquelle sont percés à la fois un premier orifice 38a alimentant en air de ventilation le conduit d'admission central 32 renfermant la première zone de circulation d'air de ventilation 34a, un deuxième orifice 38b alimentant en air de ventilation la deuxième zone de circulation d'air de ventilation 34b et un troisième orifice 38c alimentant en air de ventilation la troisième zone de circulation d'air de ventilation 34c, et
- une plaquette interne (seconde plaquette 40) destinée à être solidarisée à l'extrémité radialement externe du corps principal et sur laquelle est percée une unique ouverture centrale 40a afin de permettre à l'air de ventilation circulant dans le conduit d'admission central 32 de se diriger directement vers les cavités inter-disques de la turbine.

La chemise de refroidissement est avantageusement entièrement réalisée en fabrication additive selon le procédé d'impression 3D métallique qui se déroule selon les phases suivantes.

Tout d'abord, dans une première phase, sur un même plateau d'une machine de fabrication additive (ou imprimante 3D) sans recours à aucun support d'impression spécifique, le corps principal 30 (y compris son conduit d'admission central 32 et les parois séparatives 36a, 36b), la plaquette supérieure 38 et la plaquette interne 40 sont imprimés de préférence séparément (pour faciliter l'étape de polissage ultérieur). Afin de ne pas obtenir des surfaces déformées par le racleur de l'imprimante 3D, une épaisseur de matériau minimale de 0.5mm est en outre conseillée. L'impression du corps principal se fait verticalement en commençant au choix par sa partie inférieure (le bas du corps) ou sa partie supérieure (le haut du corps). Le matériau utilisé est un matériau métallique, parmi typiquement des alliages métalliques de type Inconel^{®}.

Ensuite, une fois l'impression terminée, il est procédé, dans une deuxième phase, à un usinage, préférentiellement de type électroérosion par enfonçage (EDM pour « electrical discharge machining »), des différents perçages 37 de chaque face extrados et intrados du corps principal. Toutefois, un perçage au laser est aussi envisageable.

Dans une troisième phase, une opération de polissage des surfaces fonctionnelles des différents éléments (surfaces de contacts entre le corps principal et les plaquettes et surfaces externes et internes de la chemise) est de préférence effectuée.

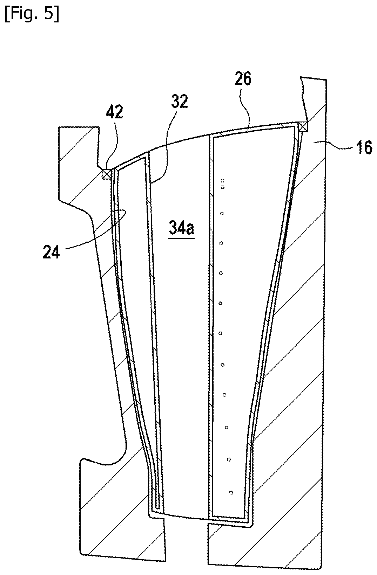

Enfin, dans une dernière phase, une opération de brasage des plaquettes externe et interne sur le corps principal permet de finaliser la chemise en un ensemble monobloc à trois zones de circulation d'air de ventilation indépendantes et étanches les unes des autres avant son montage dans la cavité 24 de la pale 16 du distributeur comme le montre la coupe de la figure 5.

La chemise de refroidissement obtenue de la sorte en fabrication additive est alors comme il est connu rendue solidaire et étanche de la paroi interne du distributeur par soudage ou brasage au niveau de sa plaquette externe 38 (voir le cordon de soudure 42), la plaquette interne 40 de la chemise étant elle simplement guidée dans la partie inférieure du distributeur qui forme une glissière pour autoriser les déplacements relatifs entre la pale 16 et la chemise de refroidissement 26.

Ainsi montée et fixée dans la cavité 24, la chemise de refroidissement 26 permet de réaliser les fonctions suivantes :
- un refroidissement par impact de la partie amont (proche du bord d'attaque) de la paroi interne de la pale du distributeur, l'air de ventilation rentrant par le deuxième orifice 38b pour alimenter la cavité amont 34b, puis étant évacué par une première rangée de perçages 37 pour venir impacter la paroi interne de la pale du distributeur. L'air va alors circuler dans l'espace délimité par la paroi interne de la pale du distributeur et la paroi externe de la chemise pour ensuite être évacué par les orifices de sortie situés sur le bord de fuite de la pale du distributeur.
- un refroidissement par impact de la partie aval (proche du bord de fuite) de la paroi interne de la pale du distributeur, l'air de ventilation rentrant par le troisième orifice 38c pour alimenter la cavité aval 34c, puis étant évacué par une autre rangée de perçages 37 pour venir impacter la paroi interne de la pale du distributeur. L'air va alors circuler dans l'espace délimité par la paroi interne de la pale du distributeur et la paroi externe de la chemise pour ensuite être évacué par les mêmes orifices de sortie situés sur le bord de fuite de la pale du distributeur.
- une alimentation en air de ventilation des cavités inter-disques, l'air rentrant par le premier orifice 38a, circulant dans le conduit d'admission central 32 et étant évacué par l'ouverture centrale 40a de la plaquette interne 40.

On notera que les deuxième 38b et troisième 38c orifices d'admission d'air de ventilation peuvent être de forme libre (rectangulaire, circulaire, ovoïde, etc...) mais doivent avoir des sections permettant de piloter les débits respectifs des cavités amont 34b et aval 34c. Autrement dit, la section de ces orifices doit être inférieure à la somme des sections des perçages composant la cavité respective. Au contraire, le premier orifice 38a (ainsi que l'ouverture centrale 40a qui peut présenter une même dimension ou une dimension inférieure) qui peut être aussi de forme libre, ne doit pas avoir une section pilotant les débits en aval, (ce rôle est en effet dévolu aux injecteurs situés dans les cavités inter-disques), c'est-à-dire que la somme de l'ensemble des sections des premiers orifices 38a du distributeur doit être supérieure à la somme des sections des injecteurs assurant les débits d'air de ventilation en aval (le calcul du débit pour un orifice doit donc être rapporté au nombre de pales du distributeur).

Les avantages principaux de l'invention résultant de la structure précitée sont dès lors les suivants :
- L'alimentation en air de ventilation des perçages amont se fait séparément des perçages situés en aval de la chemise.
- L'alimentation en air de ventilation des cavités inter-disques se fait séparément de l'alimentation des perçages et sans échauffement au passage dans le conduit d'admission central de la chemise.
- Le coût de fabrication de la pièce est réduit.

## Revendications

1. Chemise (26) de refroidissement pour une pale creuse de distributeur de turbine (10) d'une turbomachine, comportant :
- un corps principal (30) s'étendant selon une direction radiale entre une extrémité radialement externe et une extrémité radialement interne et comportant des faces extrados (30a) et intrados (30b) et un conduit d'admission central (32) définissant une première zone de circulation d'air de ventilation (34a) **caractérisé en ce que** le conduit d'admission central (32) est relié à ces deux faces par deux parois de séparation (36a, 36b) définissant des deuxième (34b) et troisième (34c) zones de circulation d'air de ventilation, chacune des faces extrados et intrados comportant au moins deux rangées de perçages (37) pour évacuer l'air de ventilation des deuxième et troisième zones de circulation d'air de ventilation,
- une plaquette externe (38) disposée à l'extrémité radialement externe du corps principal, la plaquette externe (38) comportant des premier (38a), deuxième (38b) et troisième (38c) orifices pour admettre l'air de ventilation respectivement dans les première (34a), deuxième (34b) et troisième (34c) zones de circulation d'air de ventilation, et
- une plaquette interne (40) disposée à l'extrémité radialement interne du corps principal, la plaquette interne (40) comportant une ouverture centrale (40a) pour évacuer l'air de la première zone de circulation d'air de ventilation (34a),
les plaquettes interne et externe étant solidarisées par brasage au corps principal (30, 32, 36a, 36b) pour former un ensemble monobloc à trois zones de circulation d'air de ventilation indépendantes et étanches les unes des autres, avant son montage dans la pale creuse (16) du distributeur de turbine (10).

2. Chemise de refroidissement selon la revendication 1, **caractérisée en ce que** le corps principal (30, 32, 36a, 36b) et les plaquettes externe (38) et interne (40) sont réalisées en fabrication additive et les perçages (37) sont réalisés en électroérosion par enfonçage ou au laser.

3. Chemise de refroidissement selon la revendication 1 ou la revendication 2, **caractérisée en ce que** le premier orifice (38a) comporte une section qui, rapportée au nombre de pales du distributeur, est supérieure à la somme des sections des injecteurs assurant les débits d'air de ventilation en aval.

4. Chemise de refroidissement selon la revendication 1 ou la revendication 2, **caractérisée en ce que** les deuxième (38b) et troisième (38c) orifices d'admission d'air de ventilation comportent chacun une section qui est inférieure à la somme des sections des perçages assurant respectivement l'évacuation de l'air de ventilation des deuxième (34b) et troisième (34c) zones de circulation d'air de ventilation.

5. Distributeur de turbine (10) de turbomachine comportant deux plateformes annulaires coaxiales (12, 14) entre lesquelles s'étendent des pales creuses (16) sensiblement radiales comportant chacune une chemise de refroidissement selon l'une quelconque des revendications 1 à 4.

6. Turbomachine aéronautique, telle qu'un turboréacteur ou turbopropulseur d'avion, comportant au moins un distributeur de turbine selon la revendication 5.

7. Procédé d'assemblage d'une chemise de refroidissement (26) de pale creuse (16) de distributeur de turbine (10) d'une turbomachine, **caractérisé en ce qu'**il consiste à : réaliser un corps principal (30) s'étendant selon une direction radiale entre une extrémité radialement externe et une extrémité radialement interne et comportant des faces extrados (30a) et intrados (30b) et un conduit d'admission central (32) définissant une première zone de circulation d'air de ventilation (34a) et relié à ces deux faces par deux parois de séparation (36a, 36b) définissant des deuxième (34b) et troisième (34c) zones de circulation d'air de ventilation ; réaliser une plaquette externe (38) comportant des premier (38a), deuxième (38b) et troisième (38c) orifices pour admettre l'air de ventilation respectivement dans les première, deuxième et troisième zones de circulation d'air de ventilation ; réaliser une plaquette interne (40) comportant une ouverture centrale (40a) pour évacuer l'air de ventilation de la première zone de circulation d'air de ventilation ; usiner au moins deux rangées de perçages (37) sur chacune des faces extrados et intrados du corps principal pour évacuer l'air de ventilation des deuxième et troisième zones de circulation d'air de ventilation ; et solidariser par brasage les plaquettes externe (38) et interne (40) au corps principal (30, 32, 36a, 36b) pour former un ensemble monobloc à trois zones de circulation d'air de ventilation indépendantes et étanches les unes des autres, avant son montage dans la pale creuse (16) du distributeur de turbine (10).

8. Procédé d'assemblage selon la revendication 7, **caractérisé en ce que** les faces extrados (30a) et intrados (30b) constituant la forme externe du corps principal sont configurées pour épouser une cavité interne (24) de la pale creuse (16) du distributeur (10).

9. Procédé d'assemblage selon la revendication 7 ou la revendication 8, **caractérisé en ce que** les surfaces de contact entre le corps principal et chacune des plaquettes externe (38) et interne (40) et les surfaces externes et internes du corps principal (30, 32, 36a, 36b) sont en outre polies avant leur solidarisation en ledit ensemble monobloc.

10. Procédé d'assemblage selon l'une quelconque des revendications 7 à 9, **caractérisé en ce que** le corps principal et les plaquettes externe et interne sont imprimés en un matériau métallique présentant une épaisseur d'au moins 0.5 mm.

## Patentansprüche

1. Kühlmantel (26) für eine hohle Turbinenverteilerschaufel (10) einer Turbomaschine, umfassend:
- einen Hauptkörper (30), der sich in radialer Richtung zwischen einem radial äußeren Ende und einem radial inneren Ende erstreckt und eine Oberseiten- (30a) und eine Unterseitenfläche (30b) und einen Einlasskanal (32) umfasst, der einen ersten Belüftungsluftzirkulationsbereich (34a) definiert **dadurch gekennzeichnet, dass** der mittlere Einlasskanal (32) mit diesen zwei Seiten durch zwei Trennwände (36a, 36b) verbunden ist, die einen zweiten (34b) und einen dritten (34c) Bereich für die Zirkulation von Belüftungsluft definieren, wobei jede von der Ober- und der Unterseite mindestens zwei Reihen von Bohrungen (37) zum Ableiten von Belüftungsluft aus dem zweiten und dem dritten Belüftungsluftzirkulationsbereich umfasst,
- eine äußere Platte (38), die an dem radial äußeren Ende des Hauptkörpers angeordnet ist, die äußere Platte (38) umfassend eine erste (38a), eine zweite (38b) und eine dritte (38c) Öffnung umfasst, um die Belüftungsluft jeweils in den ersten (34a), den zweiten (34b) und den dritten (34c) Belüftungsluftzirkulationsbereich einzulassen, und
- eine innere Platte (40), die an dem radial inneren Ende des Hauptkörpers angeordnet ist, die innere Platte (40) umfassend eine mittlere Öffnung (40a) zum Ableiten von Luft aus dem ersten Belüftungsluftzirkulationsbereich (34a),
wobei die innere und die äußere Platte durch Löten fest mit dem Hauptkörper (30, 32, 36a, 36b) verbunden sind, um eine einstückige Einheit mit drei voneinander unabhängigen und abgedichteten Belüftungsluftzirkulationsbereichen zu bilden, bevor sie in die hohle Schaufel (16) des Turbinenverteilers (10) montiert wird.

2. Kühlmantel nach Anspruch 1, **dadurch gekennzeichnet, dass** der Hauptkörper (30, 32, 36a, 36b) und die äußere (38) und innere (40) Platte durch additive Fertigung hergestellt werden und die Bohrungen (37) durch Senk- oder Laser-Erodieren ausgeführt werden.

3. Kühlmantel nach Anspruch 1 oder 2, **dadurch gekennzeichnet, dass** die erste Öffnung (38a) einen Querschnitt aufweist, der, bezogen auf die Anzahl der Schaufeln des Verteilers, größer ist als die Summe der Querschnitte der Injektoren, die die stromabwärtigen Belüftungsluftströme sicherstellen.

4. Kühlmantel nach Anspruch 1 oder 2, **dadurch gekennzeichnet, dass** die zweite (38b) und die dritte (38c) Belüftungslufteinlassöffnung jeweils einen Querschnitt aufweisen, der kleiner ist als die Summe der Querschnitte der Bohrungen, die jeweils das Ableiten von Belüftungsluft aus dem zweiten (34b) und dem dritten (34c) Belüftungsluftzirkulationsbereich sicherstellen.

5. Turbinenverteiler (10) für Turbomaschine, umfassend zwei koaxiale ringförmige Plattformen (12, 14), zwischen denen sich im Wesentlichen radiale hohle Schaufeln (16) erstrecken, jeweils umfassend einen Kühlmantel nach einem der Ansprüche 1 bis 4.

6. Luftfahrtturbomaschine, wie beispielsweise ein Turbostrahltriebwerk oder ein Turbotriebwerk eines Flugzeugs, umfassend mindestens einen Turbinenverteiler nach Anspruch 5.

7. Verfahren zum Zusammenbau eines Kühlmantels (26) einer hohlen Schaufel (16) eines Turbinenverteilers (10) einer Turbomaschine, **dadurch gekennzeichnet, dass** es aus Folgendem besteht: Ausführen eines Hauptkörpers (30), der sich in radialer Richtung zwischen einem radial äußeren Ende und einem radial inneren Ende erstreckt und eine Oberseiten- (30a) und eine Unterseitenfläche (30b) und einen Einlasskanal (32) umfasst, der einen ersten Belüftungsluftzirkulationsbereich (34a) definiert und mit diesen zwei Seiten durch zwei Trennwände (36a, 36b) verbunden ist, die einen zweiten (34b) und einen dritten (34c) Bereich für die Zirkulation von Belüftungsluft definieren, Ausführen einer äußeren Platte (38), umfassend eine erste (38a), eine zweite (38b) und eine dritte (38c) Öffnung umfasst, um die Belüftungsluft jeweils in den ersten, den zweiten und den dritten Belüftungsluftzirkulationsbereich einzulassen; und Ausführen einer inneren Platte (40), umfassend eine mittlere Öffnung (40a) zum Ableiten von Belüftungsluft aus dem ersten Belüftungsluftzirkulationsbereich;
Bearbeiten von mindestens zwei Reihen von Bohrungen (37) auf jeder von der Ober- und der Unterseite des Hauptkörpers, um die Belüftungsluft aus dem zweiten und dritten Belüftungsluftzirkulationsbereich abzuleiten; und feste Verbinden durch Löten der äußeren (38) und der inneren (40) Platte mit dem Hauptkörper (30, 32, 36a, 36b), um eine einstückige Einheit mit drei voneinander unabhängigen und abgedichteten Belüftungsluftzirkulationsbereichen zu bilden, bevor sie in die hohle Schaufel (16) des Turbinenverteilers (10) montiert wird.

8. Verfahren zum Zusammenbau nach Anspruch 7, **dadurch gekennzeichnet, dass** die Oberseiten- (30a) und die Unterseitenfläche (30b), die die äußere Form des Hauptkörpers bilden, konfiguriert sind, um sich an einen inneren Hohlraum (24) der hohlen Schaufel (16) des Verteilers (10) anzupassen.

9. Verfahren zum Zusammenbau nach Anspruch 7 oder 8, **dadurch gekennzeichnet, dass** die Kontaktflächen zwischen dem Hauptkörper und jeder von der äußeren (38) und der inneren (40) Platte und die äußere und innere Oberfläche des Hauptkörpers (30, 32, 36a, 36b) vor ihrer festen Verbindung in der genannten einstückigen Einheit zusätzlich poliert werden.

10. Verfahren zum Zusammenbau nach einem der Ansprüche 7 bis 9, **dadurch gekennzeichnet, dass** der Hauptkörper und die äußeren und die inneren Platte aus einem metallischen Material gedruckt sind, das eine Stärke von mindestens 0,5 mm aufweist.

## Claims

1. A cooling jacket (26) for a hollow airfoil of a turbine nozzle (10) of a turbomachine, including:
- a main body (30) extending along a radial direction between a radially outer end and a radially inner end and including suction (30a) and pressure (30b) faces and a central intake duct (32) defining a first ventilation air circulation area (34a)
**characterized in that** the central intake duct (32) is connected to these two faces by two separating walls (36a, 36b) defining second (34b) and third (34c) ventilation air circulation areas, each of the suction and pressure faces including at least two rows of drill holes (37) to expel the ventilation air from the second and third ventilation air circulation areas,
- an outer plate (38) disposed at the radially outer end of the main body, the outer plate (38) including first (38a), second (38b) and third (38c) holes to allow the ventilation air respectively into the first (34a), second (34b) and third (34c) ventilation air circulation areas, and
- an inner plate (40) disposed at the radially inner end of the main body, the inner plate (40) including a central opening (40a) to expel air from the first ventilation air circulation area (34a),
the inner and outer plates being secured by soldering to the main body (30, 32, 36a, 36b) to form a one-piece unit with three ventilation air circulation areas, independent and airtight with respect to one another, before its installation in the hollow airfoil (16) of the turbine nozzle (10).

2. The cooling jacket as claimed in claim 1, **characterized in that** the main body (30, 32, 36a, 36b) and the outer (38) and inner (40) plates are made using additive manufacturing and the drill holes (37) are made using electrical discharge machining or by laser.

3. The cooling jacket as claimed in claim 1 or claim 2, **characterized in that** the first hole (38a) includes a section which, in proportion to the number of airfoils, is greater than the sum of the sections of the injectors ensuring the ventilation air flow rates downstream.

4. The cooling jacket as claimed in claim 1 or claim 2, **characterized in that** the second (38b) and third (38c) ventilation air intake holes each include a section which is less than the sum of the sections of the drill holes respectively ensuring the expulsion of the ventilation air from the second (34b) and third (34c) ventilation air circulation areas.

5. A turbine nozzle (10) of a turbomachine including two coaxial annular platforms (12, 14) between which substantially radial hollow airfoils (16) extend, each including a cooling jacket as claimed in any of claims 1 to 4.

6. An aeronautical turbomachine, such as a turbojet engine or a turboprop engine of an airplane, including at least one turbine nozzle as claimed in claim 5.

7. A method for assembling a cooling jacket (26) of a hollow airfoil (16) of a turbine nozzle (10) of a turbomachine, **characterized in that** it consists in: making a main body (30) extending along a radial direction between a radially outer end and a radially inner end and including suction (30a) and pressure (30b) faces and a central intake duct (32) defining a first ventilation air circulation area (34a) and connected to these two faces by two separating walls (36a, 36b) defining second (34b) and third (34c) ventilation air circulation areas; making an outer plate (38) including first (38a), second (38b) and third (38c) holes for taking in ventilation air respectively in the first, second and third ventilation air circulation areas; making an inner plate (40) including a central opening (40a) for expelling the ventilation air from the first ventilation air circulation area; machining at least two rows of drill holes (37) on each of the suction and pressure faces of the main body to expel the ventilation air from the second and third ventilation air circulation areas; and securing by soldering the outer (38) and inner (40) plates to the main body (30, 32, 36a, 36b) to form a one-piece unit with three ventilation air circulation areas, independent and airtight with respect to one another, before its installation in the hollow airfoil (16) of the turbine nozzle (10).

8. The assembling method as claimed in claim 7, **characterized in that** the suction (30a) and pressure (30b) faces constituting the outer shape of the main body are configured to fit an inner cavity (24) of the hollow airfoil (16) of the nozzle (10).

9. The assembling method as claimed in claim 7 or claim 8, **characterized in that** the contact surfaces between the main body and each of the outer (38) and inner (40) plates and the outer and inner surfaces of the main body (30, 32, 36a, 36b) are moreover polished before they are secured to said one-piece unit.

10. The assembling method as claimed in any of claims 7 to 9, **characterized in that** the main body and the outer and inner plates are printed on a metallic material having a thickness of at least 0.5 mm.
